# EUROPEAN PATENT APPLICATION

(11) **EP 0 935 104 A1**
(43) Date of publication of application: **11.08.1999**
(21) Application number: 97930765.9
(22) Date of filing: 11.07.1997
(51) Int. Cl.: F24F 11/02

(54) **AIR CONDITIONER**

(30) Priority: 22.10.1996 JP 27927196
(71) Applicant: KABUSHIKI KAISHA TOSHIBA, Kawasaki-shi, Kanagawa-ken 210-8572 (JP)
(72) Inventor: INOUE, Shigeki, Fujinomiya-shi, Shizuoka 418 (JP); UNNO, Hirokazu, Shizuoka 416 (JP); NIREI, Hironori, Mishima-shi, Shizuoka 411 (JP)
(74) Representative: Waldren, Robin Michael
(86) International application number: JP9702410
(87) International publication number: WO9817955

(57) **Abstract**

An air conditioner comprises an indoor unit (1) having an indoor unit side electric load (12) connected to an AC power source (3), and an outdoor unit (2) having a plurality of outdoor unit side electric loads (21M, 22M, 23), respectively, connected to the AC power source (3) through switch contacts (7a to 7d) and transition lines (9a to 9d). Provided is an on-condition holding circuit (15) for holding at least one of the plurality of the switch contacts (7a to 7d) in a on-condition without formation of a current closing circuit between the AC power source (3) and the outdoor unit side electric loads (21M, 22M, 23) when only the indoor unit side electric load (12) is operated without operating the outdoor unit side electric loads (21M, 22M, 23).

## Description

### BACKGROUND OF THE INVENTION

### Field of the Invention

The present invention relates to an air conditioner in which a common AC power supply connected to an indoor unit side supplies both of an indoor unit and an outdoor unit with electric power.

### Related Background Art

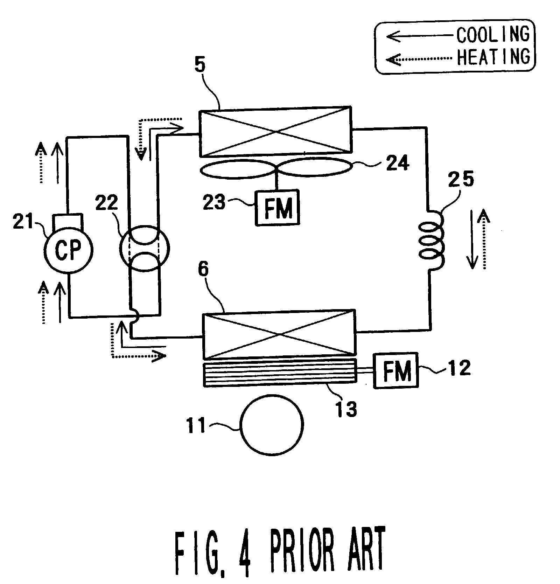

A split type air conditioner has, as illustrated in FIG. 4, a refrigerating cycle consisting of a compressor 21, a four-way valve 22, an outdoor heat exchanger 5, a capillary tube 25 and an indoor heat exchanger 6. Provided herein is an outdoor fan 24 including a drive motor 23 in order to enhance a heat exchange of the outdoor heat exchanger 5. Similarly, there is provided an indoor fan 13 including a drive motor 12 to enhance the heat exchange of the indoor heat exchanger 6. An indoor unit includes the indoor heat exchanger 6, the indoor fan 13 and the drive motor 12, while an outdoor unit includes the outdoor heat exchanger 5, the compressor 21, the four-way valve 22, the outdoor fan 24 and the drive motor 23 for the outdoor fan.

The four-way valve 22 is controlled to form a flow path indicated by a solid line in a cooling or dehumidifying operation mode, and a refrigerant is, as indicated by arrowheads of the solid lines, circulated along a route starting from the compressor 21 via the four-way valve 22, the outdoor heat exchanger 5, the capillary tube 25, the indoor heat exchanger 6 and the four-way valve 22 and returning to the compressor 21. In this case, the outdoor heat exchanger 5 functions as a condenser, and the indoor heat exchanger 6 functions as an evaporator. Reversely in a heating operation mode, the four-way valve 22 is switched to form a flow path indicated by a broken line, and the refrigerant is, as indicated by arrowheads of the broken lines, circulated along a route starting from the compressor 21 via the four-way valve 22, the indoor heat exchanger 6, the capillary tube 25, the outdoor heat exchanger 5 and the four-way valve 22 and returning to the compressor 21. In this case, the indoor heat exchanger 6 functions as a condenser, while the outdoor heat exchanger 5 functions as an evaporator. The capillary tube 25 incorporates a depressurizing function to properly keep an overheat degree of the refrigerant.

A room temperature sensor 11 is provided on an air inhalation side of the indoor heat exchanger 6 in order to control a room temperature, and a control circuit with an omission of its illustration in FIG. 4 controls an operation/stop of the compressor 21 and a rotative speed of the compressor 21 when operated in accordance with a room temperature detected by the sensor 11.

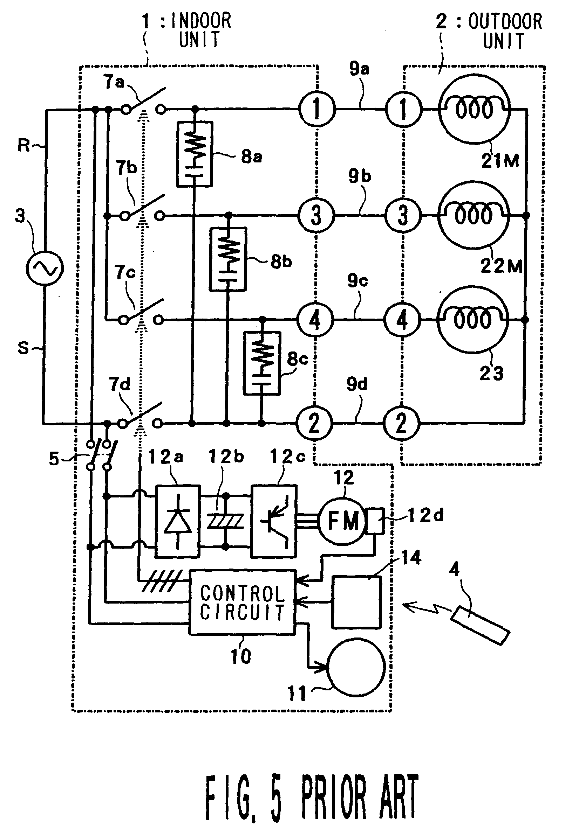

FIG. 5 shows an electric circuit for controlling the refrigerating cycle shown in FIG. 4. Referring to FIG. 5, the same components are marked with the same numerals as those in FIG. 4. Herein, an indoor fan drive motor 12 is provided as an electric load within the indoor unit 1. As electric loads of the outdoor unit 2, there are provided a compressor motor 21M for driving the compressor 21, a four-way valve solenoid 22M for switching over the four-way valve 22 in accordance with the operation mode, and an outdoor fan drive motor 23. The four-way valve solenoid 22M is energized when in the heating operation mode but is de-energized when in the cooling operation mode. These electric loads in the indoor and outdoor units are respectively driven by obtaining the electric power from a single-phase AC power supply 3 in common.

A remote controller 4 is provided for generating operation/stop commands, selecting the operation modes (dehumidification, cooling/heating operations) and setting a room temperature. A receiving unit 14 provided in the indoor unit 1 receives setting signals transmitted from the remote controller 4. The setting signals received by the receiving unit 14 are transmitted into a microcomputer-incorporated control circuit 10. Further transmitted into the control circuit 10 are a room temperature detecting signal from the room temperature sensor 11 and a position detecting signal from a position sensor 12d for detecting a rotor position of the indoor fan drive motor 12 composed of a DC brushless motor. The control circuit 10 controls the indoor fan drive motor 12, the compressor motor 21M, the four-way valve solenoid 22M and the outdoor fan drive motor 23 in order to meet setting conditions in the remote controller 4.

The indoor unit 1 is supplied with the drive electric power from the single-phase AC power supply 3. The outdoor unit 2 is supplied with the drive electric power from the indoor unit 1 via connecting wires 9a, 9b, 9c, 9d. One line R of the AC power supply 3 is connected to one end of the compressor motor 21M through a switch contact 7a and the connecting wire 9a, connected to one end of the four-way valve solenoid 22M through a switch contact 7b and the connecting wire 9b, and further connected to one end of the outdoor fan drive motor 23 through a switch contact 7c and the connecting wire 9c. The other line S of the AC power supply 3 is connected in common to each of the other ends of the compressor motor 21M, the four-way valve solenoid 22M and the outdoor fan drive motor 23 via a switch contact 7d and the connecting
wire 9d. Note that noise absorbers 8a, 8b, 8c are connected between each of load sides of the switch contacts 7a, 7b, 7c and a load side of the switch contact 7d.

Generally when the air conditioner is stopped, the control circuit 10 switches off all of the switch contacts 7a, 7b, 7c, 7d, and also switches off a switch contact 5 connected to an electric power supply path to the indoor fan drive motor 12. Further, once a command to start the operation in the heating operation mode is given, all those switch contacts are switched on. If operated in the cooling or dehumidifying operation mode, the switch contact 7b connected in series to the four-way valve solenoid 22M is set in the OFF-state, and the switch contacts other than this contact 7b are set in the ON-state.

When the room temperature detected by the sensor 11 is coincident with the room temperature set value, the control circuit 10 switches off the switch contact 7a connected in series to the compressor motor 21M and also the switch contact 7c connected in series to the outdoor fan drive motor 23. Moreover, if operated to blow the air by using only the indoor unit 1, only the switch contact 5 is switched on, whereas all the switch contacts 7a, 7b, 7c, 7d connected to the path for supplying the electric power to the outdoor unit 2, are switched off. Incidentally, the noise absorber 8a absorbs noises produced in the wire 9a when switching on/off the switch contact 7a. The noise absorber 8b absorbs the noises produced in the wire 9b when switching on/off the switch contact 7b. The noise absorber 8c absorbs the noises produced in the wire 9c when switching on/off of the switch contact 7c.

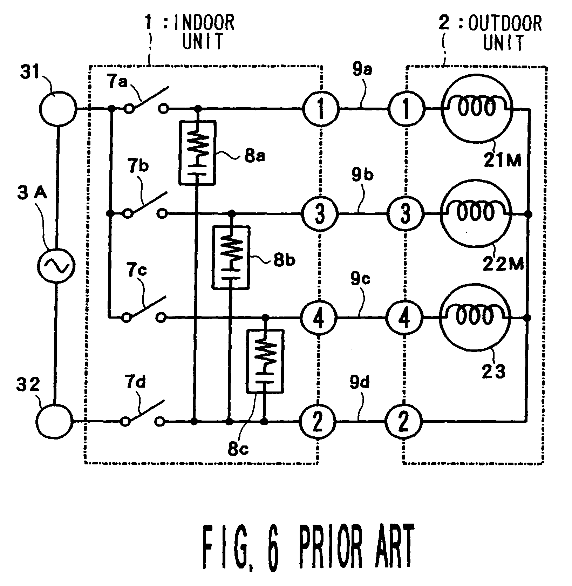

FIG. 5 illustrates a circuit for obtaining the drive electric power from the typical single-phase AC power supply 3. In the case of obtaining the drive electric power from a single-phase 3-wire distribution system, as shown in FIG. 6, one end of the compressor motor 21M is connected via the switch contact 7a and the wire 9a to a voltage line 31 of a single-phase 3-wire system AC power supply 3A. Further, one end of the four-way valve solenoid 22M is connected via the switch contact 7b and the wire 9b to the voltage line 31. Moreover, one end of the outdoor fan drive motor 23 is connected via the switch contact 7c and the wire 9c to the voltage line 31. At the same time, the other ends of the compressor motor 21M, the four-way valve solenoid 22M and the outdoor fan drive motor 23 are connected in common to a neutral line 32 of the AC power supply 3A via the switch contact 7d and the wire 9d.

In the prior art air conditioner illustrated in FIGS. 5 and 6, the switch contacts 7a, 7b, 7c, 7d are provided in all of the electric power supply paths to the compressor motor 21M, the four-way valve solenoid 22M and the outdoor fan drive motor 23, which are included in the outdoor unit 2. In the case of operating only the indoor fan 13 by the drive motor 12, i.e., operating only the indoor unit 1 as well as during the stop of the air conditioner, electric power supply to the outdoor unit 2 is completely cut off by switching off all the switch contacts 7a, 7b, 7c, 7d, thereby preventing a person from receiving an electric shock even when touching on the stopped outdoor unit 2.

Thus, all the switch contacts 7a, 7b, 7c, 7d are set in the OFF-state, and the respective electric loads of the outdoor unit 2 including the wires 9a, 9b, 9c, 9d are brought into a floating state. Hereupon, impedances of the respective lines including the connecting wires increase as estimated from the side of the power supply. When operating only the indoor unit 1 as in the air blowing operation in this state, the noises are caused across the power supply line when switching on/off the indoor fan drive motor 12, and the wires 7a-7d exhibiting a high line impedance are liable to have an influence of these noises, viz., the radiation noises. That is to say, there must be such an inconvenience that an adverse influence is exerted upon the operations of other outside electric devices.

Further, as shown in FIG. 5, the indoor fan drive motor 12 is supplied with the drive electric power from the AC power supply 3 via a rectifying circuit 12a, a smoothing capacitor 12b and a 3-phase bridge type transistor inverter circuit 12c. The motor 12 is, in the case of its being a variable speed type DC brushless motor as provided with a position detecting element 12d for the control, liable to cause particularly the noises described above, which might exert a large adverse influence on the outside electric devices.

### SUMMARY OF THE INVENTION

It is a primary object of the present invention to provide an air conditioner capable of minimizing an influence of noises caused on the side of an indoor unit upon outside electric devices as well as of preventing an increase in impedances of connecting wires even in such a case as to operate only an indoor unit as in an operation of blowing the air into a room.

To accomplish the above object, an air conditioner according to the present invention is constructed such that an indoor unit is connected to an AC power supply to drive an indoor unit side load, outdoor unit side loads are driven via a plurality of connecting wires for connecting the indoor and outdoor units to each other, and the outdoor unit side loads are independently driven by respectively connecting switching elements to a route along which the connecting wires are connected to the AC power supply. This air conditioner also comprises an ON-state holding element for holding at least one of the switching elements in the ON-state when operating only the indoor unit side load. It is therefore possible to restrain line impedances of the connecting wires as estimated from the power supply line down to a low level and also minimize the influence of noises produced on the side of the indoor unit.

The AC power supply has a neutral phase, and only the switching element connected to this neutral phase can be held in the ON state. With this configuration, a person does not necessarily suffer from an electric shock when touching on the outdoor unit because of the switching elements being in the ON-state irrespective of a type of the power supply. However, the safety from the electric shock if the person touches thereon can be more enhanced than in a case where the switching elements connected to the voltage phase are set in the ON-state.

The indoor unit side load is an indoor fan drive motor, and this indoor fan drive motor is a DC motor. With this construction, when the DC motor easy to cause high-frequency noises is the indoor fan drive motor, at least one of the switching elements is set in the ON-state, whereby the high-frequency component noises applied across the connecting wires can be restrained down to a low level.

### BRIEF DESCRIPTION OF THE DRAWINGS

Other objects and advantages of the present invention will become apparent during the following discussion in conjunction with the accompanying drawings, in which:
FIG. 1 is an electric circuit diagram showing a first embodiment of the present invention;
FIG. 2 is an electric circuit diagram showing a second embodiment of the present invention;
FIG. 3 is an electric circuit diagram showing a third embodiment of the present invention;
FIG. 4 is a diagram illustrating a refrigerating cycle system of a prior art typical split type air conditioner;
FIG. 5 is a diagram showing a conventional electric circuit for controlling the refrigerating cycle system shown in FIG. 4; and
FIG. 6 is a diagram illustrating another conventional electric circuit for controlling the refrigerating cycle system shown in FIG. 4.

### DESCRIPTION OF THE PREFERRED EMBODIMENTS

Preferred embodiments of the present invention will hereinafter be described in detail with reference to the accompanying drawings.

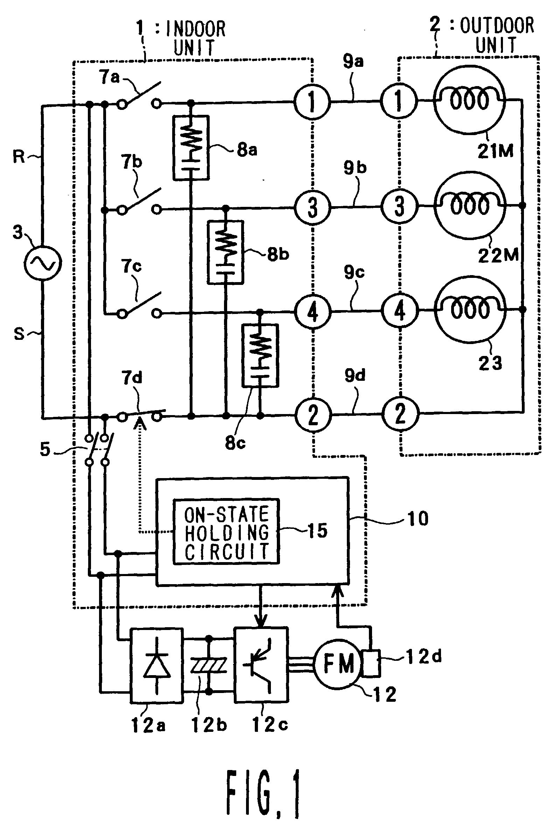

FIG. 1 is an electric circuit diagram showing a first embodiment of the present invention. Referring to FIG. 1, the same components as those in FIG. 5 are marked with the same numerals, and their explanations are omitted. The following is a construction different from that shown in FIG. 5. All switch contacts 7a, 7b, 7c, 7d are switched off when an air conditioner is stopped, and there is detected such a state of operating only an indoor unit 1, i.e., carrying out only an air blowing operation indoors. An ON-state holding circuit 15 for holding the switch contact 7d in an ON-state is newly added to a control circuit 10. Herein, the switch contact 7d is connected between a connecting wire 9d to which a compressor motor 21M, a four-way valve solenoid 22M and an outdoor fan drive motor 23 are connected in common, and a line S of an AC power supply 3. Accordingly, there decrease impedances as estimated from the side of an AC power supply 3.

As a result, when operating only loads on the side of an indoor unit, viz., when the indoor fan 13 is changed from the stop to the operation and vice versa in the case of driving only the indoor fan drive motor 12 with only a command to blow the air into the room which command is given from the remote controller, or further even if the noises derived from a variable speed drive, it is feasible to restrain the noises down to a low level in the connecting wires at that time. Accordingly, the adverse influence by the noises upon the outside electric devices excluding the air conditioner can be prevented.

Particularly as in this embodiment, the indoor fan drive motor 12 is supplied with the electric power via the rectifying circuit 12a, the smoothing capacitor 12b and the 3-phase bridge type transistor inverter circuit 12c. Besides, the drive motor 12 includes the position sensor 12d, and, in a case where the drive motor 12 is a DC brushless motor for effecting a variable speed drive of the inverter circuit 12c by a pulse width modulation, the high-frequency noises are easily produced. Hence, there must be a high effect to reduce the noises according to the present invention.

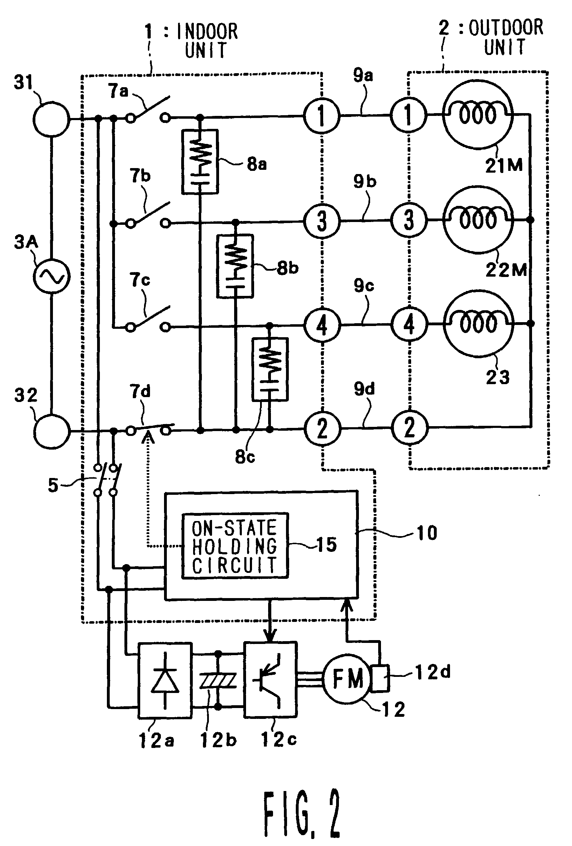

FIG. 2 is an electric circuit diagram illustrating a second embodiment of the present invention. Referring to FIG. 2, the same components as those in FIG. 1 are marked with the same numerals, and their explanations are omitted. Herein, a single-phase 3-wire system AC power supply 3A is used instead of the AC power supply 3 shown in FIG. 1. One end of the compressor motor 21M is connected to a voltage line 31 thereof via the switch contact 7a and the connecting wire 9a. One end of the four-way valve solenoid 22M is connected to the line 31 via the switch contact 7b and the connecting wire 9b. Further, one end of the outdoor fan drive motor 23 is connected to the line 31 via the switch contact 7c and the connecting wire 9c. The other ends of the compressor motor 21M, the four-way valve solenoid 22M and the outdoor fan drive motor 23 are connected in common to a neutral line 32 of the single-phase 3-wire system AC power supply 3A through a relay contact 7d and a connecting wire 9d. An ON-state holding circuit 15 detects an indoor air blowing operation, i.e., a state of operating only the indoor unit 1, thereby holding the switch contact 7d in the ON-state.

As known well, a power distributing system in the single-phase 3-wire system is a system in which a secondary-side neutral point of a single-phase transformer for a power distribution is grounded, from which a neutral line is led, and the loads are supplied with the electric power through three lines, i.e., the neutral line and two voltage lines on both outer sides. In accordance with the second embodiment, the driving electric power is obtained from the neutral line 32 as well as from the voltage line 31 on one outer side. Herein, supposing that the switch contact 7d is held in the ON-state by the ON-state holding circuit 15, the compressor motor 21M, the four-way valve solenoid 22M and the outdoor fan drive motor 23 are held at a ground potential through the switch contact 7d even if the switch contacts 7a, 7b, 7c are in the OFF-state.

Therefore, in accordance with the second embodiment, as in the first embodiment shown in FIG. 1, even if the noises caused by the indoor unit side electric loads, e.g., the operation/stop of the indoor fan 13 in the case of operating only the indoor unit 1 as in the first embodiment shown in FIG. 1, or caused the variable speed drive, are produced across the power supply line, it is possible to restrain the noises produced in the connecting wires 9a, 9b, 9c to the outdoor unit 2 down to the low level. The adverse influence upon the outside electric devices can be thereby prevented. In this case, the electric circuits of the outdoor unit 2 are held at the ground potential, and hence there is no possibility of causing an electric shock even when a person touches thereon. The safety is more enhanced than in the first embodiment.

Note that the switch contact 7d connected to the power supply line to which the compressor motor 21M, the four-way valve solenoid 22M and the outdoor fan drive motor 23 that constitute the outdoor unit 2 are connected in common, is held in the ON-state in the first and second embodiments. It is, however, feasible to restrain the line impedances of the connecting wires as estimated from the AC power supply 3 down to the low level even if, for example, the switch contact 7d is held in the OFF-state while any one or a plurality of the relay contacts 7a, 7b, 7c other than the contact 7d are held in the ON-state.

Note that the embodiments given above have been discussed on the assumption that the indoor unit side electric load driven by the AC power supply is the indoor fan drive motor 12 of the DC brushless type, while the outdoor unit side electric loads are the compressor motor 21M of the ON/OFF drive type, the four-way valve solenoid 22M and the outdoor fan drive motor 23. The present invention can be, however, applied to constructions including loads other than the above-mentioned loads.

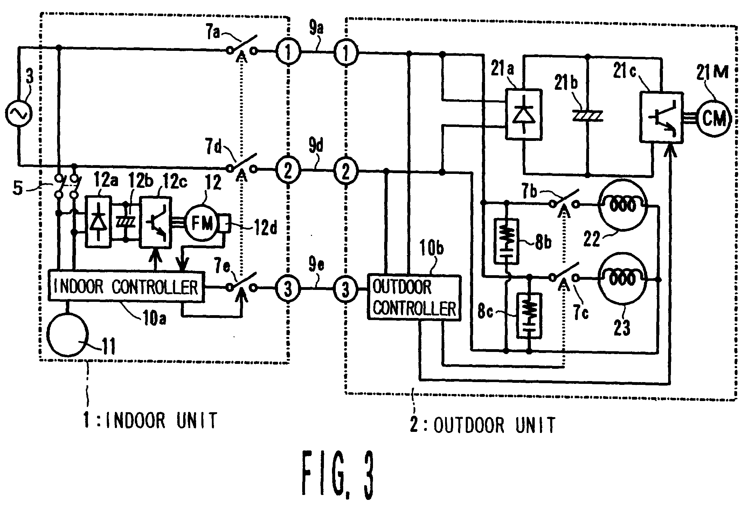

Moreover, the same effect can be obtained if the indoor fan drive motor 12 is of such a type as to be driven in the variable speed manner by a tap relay. Further, the same effect can be also acquired by the following construction. The compressor motor 21M is, as illustrated in FIG. 3, supplied with the drive electric power via the rectifying circuit 21a, the smoothing capacitor 21b and the 3-phase bridge type transistor inverter circuit 21c. The outdoor unit 2 is provided with an outdoor controller 10b connected to an indoor controller 10a via a communication line 9e. The indoor controller 10a transmits a control command signal to the outdoor controller 10b via the communication line 9e. The outdoor controller 10b receives the signal, and the compressor motor 21M is subjected to the variable speed drive by driving the inverter circuit 21c in the ON/OFF states with the pulse width modulation. In this case, the outdoor unit 2 can be surely shut off from the indoor unit 1 by providing also the communication line 9e with a switch contact 7e. If the communication line itself is electrically isolated by a photo-coupler, etc., however, the switch contact 7e may not be provided.

As obvious from the discussion made so far, the air conditioner according to the present invention is constructed such that the indoor unit is connected to the AC power supply, and the outdoor unit is supplied with the electric power through the connecting wires from the indoor unit, thereby driving the electric loads in the outdoor unit. In this air conditioner, there is provided the ON-state holding circuit for holding in the ON-state at least one of the switching elements connected to in series to the respective connecting wires when operating only the indoor unit. With this construction, it is possible to restrain both the line impedances of the connecting wires as estimated from the power supply line down to the low level, and the influence of the noises caused on the side of the indoor unit upon the outside electric devices.

Further, in the case of the AC power supply classified as the single-phase 3-wire system having the neutral line, only the switching elements connected to this neutral line are held in the ON-state, whereby the safety from the electric shock can be more enhanced than in the case of setting in the ON-state the switching elements connected to the voltage line.

Even if the indoor unit side electric load is the indoor fan drive motor and the indoor fan drive motor is the DC brushless motor easy to cause the high frequency noises, the level of the high-frequency component noises applied across the connecting wires for supplying the electric power to the outdoor unit, can be restrained low by setting at least one of the switching elements in the ON-state.

It is apparent that, in this invention, a wide range of different working modes can be formed based on the invention without deviating from the spirit and scope of the invention. This invention is not restricted by its specific working modes except being limited by the appended claims.

## Claims

1. An air conditioner comprising:
an indoor unit having an indoor unit side electric load connected to an AC power supply; and
an outdoor unit having a plurality of outdoor unit side electric loads respectively connected to said AC power supply through switching elements and connecting wires,
characterized by further comprising:
ON-state holding means for holding at least one of said plurality of switching elements in an ON-state without forming a closed current circuit between said AC power supply and said outdoor unit side electric loads when operating only said indoor unit side electric load with no operation of said outdoor unit side electric loads.

2. The air conditioner according to claim 1, wherein said AC power supply is obtained from between a neutral line of a single-phase 3-wire system power distribution line and one voltage line, and said On-state holding means holds only said switching element connected to the neutral line in an ON-state.

3. The air conditioner according to claim 1 or 2, wherein said indoor unit side electric load is an indoor fan drive motor constructed of a DC brushless motor.
